# EUROPEAN PATENT APPLICATION

(11) **EP 1 676 820 A1**
(43) Date of publication of application: **05.07.2006**
(21) Application number: 04792615.9
(22) Date of filing: 19.10.2004
(51) Int. Cl.: C04B 22/00, C04B 24/12, C04B 24/04, C04B 22/16, E21D 11/10, E02D 17/20

(54) **LIQUID QUICK-SETTING ADMIXTURE, SHOTCRETING MATERIAL AND METHOD FOR SHOTCRETING USING THEM**

(30) Priority: 20.10.2003 JP 2003359014
(71) Applicant: DENKI KAGAKU KOGYO KABUSHIKI KAISHA, Tokyo 103-8338 (JP)
(72) Inventor: NAKASHIMA, Yasuhiro, Denki Kagaku Kogyo K. K., Nishi-kubiki-gun, Niigata 9490393 (JP); TERASHIMA, Isao, Denki Kagaku Kogyo K. K., Nishi-kubiki-gun, Niigata 9490393 (JP); ISHIDA, Atsumu, Denki Kagaku Kogyo K. K., Nishi-kubiki-gun, Niigata 9490393 (JP)
(74) Representative: Hartz, Nikolai
(86) International application number: PCT/JP2004/015446
(87) International publication number: WO 2005/037729

(57) **Abstract**

To provide a liquid quick-setting admixture and a spraying material and a spraying method using it, which make spraying excellent in quick-setting property possible and which may improve the storage stability of the liquid quick-setting admixture.

A liquid quick-setting admixture **characterized by** comprising sulfur, aluminum and alkali metal element components, and a complexing agent. Said liquid quick-setting admixture preferably contains per 100 parts of the sulfur element component as SO₃, from 25 to 110 parts of the aluminum element component as Al₂O₃, from 2.5 to 50 parts of the alkali metal element component as R₂O (in which R is an alkali metal atom) and from 2.5 to 75 parts of the complexing agent.

## Description

### TECHNICAL FIELD

The present invention relates to a liquid quick-setting admixture and a spraying material to be used for spraying a quick-setting cement concrete to a surface of exposed ground at slopes or tunnels such as road tunnels, railway tunnels or channel tunnels, and a spraying method using it.

### BACKGROUND ART

Heretofore, methods of spraying a quick-setting concrete obtained, for example, by mixing a concrete with a powder quick-setting admixture in which an alkali metal aluminate, an alkali metal carbonate or the like was admixed with calcium aluminate, were applied to prevent break and fall of ground exposed in excavation works of tunnels or the like (cf. Patent Document 1 and 2).

However, there has been an increasing demand for a quick-setting admixture having a pH-value lower than that of the powder quick-setting admixture in which an alkali metal aluminate, an alkali metal carbonate or the like was admixed with calcium aluminate, and being weakly alkaline to acidic, preferably neutral or weakly acidic.

Liquid quick-setting admixtures proposed for this purpose include one composed mainly of a basic aluminum salt and an organic carboxylic acid (cf. Patent Document 3), one composed mainly of aluminum sulfate and an alkanolamine (cf. Patent Document 4), and one composed mainly of a basic aqueous solution of aluminum, lithium silicate and lithium aluminate (cf. Patent Document 5).

However, such liquid quick-setting admixtures had problems that it is hard to achieve satisfactory initial strength development and that in a case of heavy-spraying in a tunnel, it is not easy to realize heavy-spraying as compared with the conventional power-type quick-setting admixtures.

Furthermore, quick-setting admixtures containing fluorine in addition to aluminum sulfate were developed as acidic liquid quick-setting admixtures with an increased quick-setting property (cf. Patent Document 6, Patent Document 7, Patent Document 8).

However, there were desires for further improvement in the quick-setting property, improvement in the adherability in a spring place, and so on for practical use.

Expectations were recently high for development of a liquid quick-setting admixture having less effect on the human body and better initial strength development than those of the conventional basic quick-setting admixtures.
Patent Document 1: JP-B-60-004149
Patent Document 2: JP-A-09-019910
Patent Document 3: JP-A-2001-509124
Patent Document 4: JP-A-10-087358
Patent Document 5: JP-A-2001-130935
Patent Document 6: JP-A-2002-080250
Patent Document 7: JP-A-2002-047048
Patent Document 8: JP-A-2004-035387

### DISCLOSURE OF THE INVENTION

### OBJECT TO BE ACCOMPLISHED BY THE INVENTION

As mentioned above, there has been an increasing demand for a quick-setting admixture having a pH-value lower than that of a powder quick-setting admixture and being weakly alkaline to acidity, preferably neutral or weakly acidic, which is capable of securing achievement of sufficient safe-strength in a short period of time, and preventing impairment of product performance or stability for a long period of time.

### MEANS TO ACCOMPLISH THE OBJECT

Under the above-mentioned circumstances, the present inventors have conducted extensive studies to overcome the above problems and, as a result, have found that by a specific liquid quick-setting admixture, it is possible to improve the liquid stability and induce the ability as a quick-setting admixture sufficiently, and the present invention has been accomplished on the basis of this discovery.

The present invention provides the following.
(1) A liquid quick-setting admixture characterized by comprising sulfur, aluminum and alkali metal element components, and a complexing agent.
(2) The liquid quick-setting admixture according to (1), wherein the liquid quick-setting admixture contains, per 100 parts of the sulfur element component as SO₃, from 25 to 110 parts of the aluminum element component as Al₂O₃, from 2.5 to 50 parts of the alkali metal element component as R₂O (in which R is an alkali metal atom) and from 2.5 to 75 parts of the complexing agent.
(3) The liquid quick-setting admixture according to (1) or (2), which further contains fluorine.
(4) The liquid quick-setting admixture according to any one of (1) to (3), wherein the liquid quick-setting admixture contains from 2.5 to 50 parts of fluorine per 100 parts of the sulfur element component as SO₃.
(5) The liquid quick-setting admixture according to any one of (1) to .(4), which further contains an alkanolamine.
(6) The liquid quick-setting admixture according to any one of (1) to (5), wherein the liquid quick-setting admixture contains from 2.5 to 50 parts of an alkanolamine per 100 parts of the sulfur element component as SO₃.
(7) The liquid quick-setting admixture according to any one of (1) to (6), wherein the alkali metal element component is sodium or potassium.
(8) The liquid quick-setting admixture according to any one of (1) to (7), wherein the complexing agent is an organic acid having from 1 to 3 carboxyl groups.
(9) The liquid quick-setting admixture according to any one of (1) to (8), wherein the complexing agent is incorporated in an amount of from 2.5 to 75 parts per 100 parts of the sulfur element component as SO₃.
(10) The liquid quick-setting admixture according to any one of (1) to (9), wherein the liquid quick-setting admixture has a pH of at most 6.
(11) A spraying material comprising the liquid quick-setting admixture as defined in any one of (1) to (10), cement, water and an aggregate.
(12) The spraying material according to (11), wherein the liquid quick-setting admixture is contained in an amount of from 5 to 15 parts as a solid content per 100 parts of cement.
(13) The spraying material according to (11) or (12), wherein the unit cement amount is at least 350 kg/m³.
(14) The spraying material according to any one of (11) to (13), wherein the cement is one having a C3A content of at least 5 parts in 100 parts of the cement.
(15) A spraying method which comprises spraying the spraying material as defined in any one of (11) to (14).

### EFFECT OF THE INVENTION

The quick-setting admixture, the spraying material and the spraying method using it of the present invention, are effective to make spraying excellent in quick-setting property possible and to improve the storage stability of the liquid quick-setting admixture.

### BEST MODE FOR CARRYING OUT THE INVENTION

The term "cement concrete" in the present invention is a generic term for a cement paste, mortar or concrete.

Further, "part" and "%" in the present invention are based on mass unless otherwise defined in particular.

The liquid quick-setting admixture of the present invention (hereinafter referred to as present quick-setting admixture) comprises sulfur, aluminum and alkali metal element components, and a complexing agent. The present quick-setting admixture is in a liquid form, which includes a suspension. The size of suspended particles in the suspension is not particularly limited, but the average particle size is preferably at most 5 µm from the viewpoint of dispersibility of the suspended particles.

In the present invention, the present quick-setting admixture may be any one so long as it comprises sulfur, aluminum and alkali metal element components, and a complexing agent. Accordingly, a raw material compound containing each component is not limited depending upon a difference in e.g. a chemical structure, an isomer due to such a difference, crystalline or amorphous, the presence or absence of water of crystallization, the number of water of crystallization, polymorph due to a difference in a crystal structure, solid-solubilization due to a trace element, a lattice defect, etc.

A raw material compound containing a sulfur element component to be used in the present invention, is not particularly limited. In addition to sulfur in an elemental state such as sulfur or sublimed sulfur, it may, for example, be a sulfur compound such as a sulfide, sulfuric acid or a sulfate, sulfurous acid or a sulfite, thiosulfuric acid or a thiosulfate, or an organic sulfur compound.

The sulfide may, for example, be sodium sulfide, potassium sulfide, iron sulfide or phosphorus pentasulfide.

The sulfate may, for example, be an alum such as ammonium alum, sodium alum or potassium alum, ammonium sulfate, sodium sulfate, magnesium sulfate, calcium sulfate, barium sulfate, manganese sulfate, aluminum sulfate or aniline sulfate.

The sulfite may, for example, be sodium sulfite, potassium sulfite or sodium hydrogen sulfite.

The thiosulfate may, for example, be ammonium thiosulfate, sodium thiosulfate or barium thiosulfate.

In the present invention, one or more of such sulfur compounds may be used. Among them, it is preferred to use sulfuric acid or a sulfate, because of its high solubility in water, low production cost and excellent aggregation property. Among the sulfates, it is most preferred to use an alum containing aluminum or an alkali metal.

A raw material compound containing an aluminum element component to be used in the present invention, is not particularly limited. It may, for example, be an aluminum compound such as a sulfate of aluminum represented by an alum, an aluminate of aluminum, an amorphous or crystalline aluminum hydroxide, or other inorganic or organic aluminum compounds.

The sulfate of aluminum may, for example, be an alum such as ammonium alum, sodium alum or potassium alum, aluminum hydroxysulfate or aluminum sulfate.

The aluminate may, for example, be lithium aluminate, sodium aluminate, potassium aluminate or magnesium aluminate.

Other inorganic aluminum compounds may, for example, be bauxite, aluminum oxide, aluminum hydroxide, aluminum chloride, aluminum phosphate, aluminum nitrate, aluminum fluoride, aluminum polychloride, alumino-silica gel, aluminum silicate, aluminum carbonate hydroxide or a synthetic hydrotalcite.

The organic aluminum compound may, for example, be aluminum stearate, aluminum oxalate, aluminum isopropoxide or aluminum formate.

One or more of such aluminum compounds may be used.

In the present invention, it is preferred to use a sulfate which will serve also as a sulfur element component, and it is particularly preferred to use an alum from the viewpoint of the excellent aggregation property.

A raw material containing an alkali metal element component to be used in the present invention is not particularly limited, so long as it is a water-soluble compound containing lithium, sodium, potassium or the like. It is possible to use, in addition to, for example, a silicate, a silicofluoride and an alum, containing sulfur or aluminum, compounds such as an oxide, a chloride, a hydroxide, a nitrate, a nitrite, a phosphate, a monohydrogen phosphate, a dihydrogen phosphate, an aluminate, a sulfate, a thiosulfate, a sulfide, a carbonate, a bicarbonate, an oxalate and a borate, containing an alkali metal. Among such compounds, one or two may be used. Among them, preferred is a compound of lithium, sodium or potassium, which is readily available.

The liquid quick-setting admixture of the present invention preferably contains a fluorine component. A raw material compound containing such a fluorine component, is not particularly limited so long as it is a compound which contains fluorine and is soluble or dispersible in water. It may, for example, be a fluorine compound such as a fluoride, a silicofluoride, a boron fluoride, an organic fluorine compound or a hydrofluoric acid. One or more of them may be used.

The above fluoride may, for example, be lithium fluoride, sodium fluoride, potassium fluoride, calcium fluoride, aluminum fluoride or cryolite. As the cryolite, it is possible to use either natural one or synthetic one.

The silicofluoride may, for example, be ammonium silicofluoride, sodium silicofluoride, potassium silicofluoride or magnesium silicofluoride.

The boron fluoride may, for example, be boron fluoride, boron trifluoride, a boron trifluoride monoethylamine complex, a boron trifluoride acetic acid complex, boron trifluoride triethanolamine, ammonium borofluoride, sodium borofluoride, potassium borofluoride or ferrous borofluoride.

The raw material compound containing the fluorine component is preferably fluoride or a silicofluoride because of high safety, low production cost and excellent aggregation property.

Further, the liquid quick-setting admixture of the present invention preferably contains an alkanolamine. The alkanolamine is an organic compound having an N-R-OH structure as a structural formula. Here, R is an atomic group referred to as an alkylene group or an arylene group. Examples of the alkylene group include linear type alkylene groups such as a methylene group, an ethylene group and an n-propylene group; and alkylene groups having branched-structures such as an isopropylene group. Examples of the arylene group include arylene groups having an aromatic ring, such as a phenylene group and a tolylene group.

Furthermore, R may be bonded to the nitrogen atom through at least two bonds, and a part or whole of R may have a cyclic structure.

Further, R may be bonded to a plurality of hydroxyl groups, and the alkyl group may contain an element other than carbon and hydrogen, e.g. sulfur, fluorine, chlorine or oxygen, in a part of the structure.

Examples of the alkanolamine include ethanolamine, diethanolamine, triethanolamine, N-methyldiethanolamine, N,N-dimethylethanolamine, N,N-dibutylethanolamine, N-(2-aminoethyl)ethanolamine, boron trifluoride triethanolamine, and derivatives thereof. In the present invention, one or more of them may be employed. Among them, preferred is diethanolamine, N,N-dimethylethanolamine or a mixture thereof. More preferred is the mixture of diethanolamine and N,N-dimethylethanolamine.

The complexing agent to be used in the present invention is one for stabilization of metal ions in an acidic liquid quick-setting admixture, and is not particularly limited so long as it can be used for this purpose. Such a complexing agent may, for example, be an organic acid having at least 1, preferably from 1 to 3, more preferably from 2 to 3 carboxyl groups. Further, it is possible to use one having from 1 to 3 hydroxyl groups and/or from 1 to 3 amino groups.

Specific examples of such complexing agents may be (1) monocarboxylic acids such as formic acid, acetic acid and propionic acid, (2) dicarboxylic acids such as oxalic acid, malonic acid, succinic acid, glutaric acid, adipic acid, pimelic acid, maleic acid, fumaric acid and phthalic acid, (3) tricarboxylic acids such as trimellitic acid and tricarballylic acid, (4) oxymonocarboxylic acids such as hydroxybutyric acid, lactic acid and salicylic acid, and oxydicarboxylic acids such as malic acid, (5) aminocarboxylic acids such as aspartic acid and glutamic acid, (6) aminopolycarboxylic acids such as ethylenediamine tetraacetic acid (EDTA) and trans-1,2-diaminocyclohexane tetraacetic acid (CyDTA), (7) phosphonic acids such as ethylenediamine tetra(methylenephosphonic acid) [EDTPO], ethylenediamine di(methylenephosphonic acid) [EDDPO], nitrilotris(methylenephosphonic acid) [NTPO] and 1-hydroxyethylidene-1,1'-diphosphonic acid (HEDPO), (8) condensed phosphoric acids such as phosphoric acid, tripolyphosphoric acid and hexametaphosphoric acid, and (9) diketones such as acetylacetone and hexafluoroacetylacetone. One or more of such complexing agents may be used in the present invention.

Among them, it is preferred to use at least one member selected from the group consisting of oxalic acid, malonic acid, succinic acid and condensed phosphoric acids.

In the present quick-setting admixture, sulfur, aluminum and alkali metal element components are preferably blended in an amount of from 25 to 110 parts of the aluminum element component as Al₂O₃ and from 2.5 to 50 parts of the alkali metal element component as R₂O (in which R is an alkali metal), per 100 parts of the sulfur element component as SO₃, from the viewpoint of e.g. aggregation property, suspensibility and pump pressure feed property.

In such blending, in the case of not containing sulfur, the pH of the liquid quick-setting admixture is high, whereby injury by alkali is likely to occur. If the content of aluminum or an alkali metal is less than the above amount, there is a case where sufficient aggregation property can not be obtained. If the contents of such three components exceed the above amounts, the viscosity of the liquid is likely to be high, whereby the pump pressure feed property is likely to decrease. It is particularly preferred that the aluminum element component is from 40 to 80 parts as Al₂O₃, and the alkali metal element component is from 10 to 25 parts as R₂O (in which R is an alkali metal).

Further, the amount of each of the fluorine component and the alkanolamine in the present quick-setting admixture is preferably from 2.5 to 50 parts, particularly preferably from 5 to 25 parts, per 100 parts of the sulfur element component as SO₃. Here, the amount of the fluorine component is calculated as fluorine atoms.

Further, the amount of the complexing agent contained in the present quick-setting admixture is preferably from 2.5 to 75 parts, particularly preferably from 5 to 50 parts, per 100 parts of the sulfur element component as SO₃3.

The present quick-setting admixture is preferably made to be weakly alkaline to acidic, which presents little adverse effects on human body, and its pH is preferably at most 6, particularly preferably from 3 to 1.5.

The total amount of the raw material compounds containing the sulfur element component as SO₃, the aluminum element component as Al₂O₃, the alkali metal element component as R₂O and other components to be blended as the case requires, contained in the present quick-setting admixture, is preferably from 10 to 65 parts, particularly preferably from 25 to 55 parts in 100 parts of the present quick-setting admixture. If the above total amount is less than 10 parts, the excellent aggregation property may not be obtained in some cases. If it exceeds 65 parts, the viscosity of the liquid may become too high, and the pressure-feeding property with a pump tends to be poor in some cases.

The amount of the liquid quick-setting admixture to be used in the present invention is preferably from 5 to 15 parts, particularly preferably from 7 to 10 parts, per 100 parts of the cement. If such an amount is less than 5 parts, the excellent aggregation property may not be obtained in some cases. On the other hand, if it exceeds 15 parts, the long-term strength development tends to be poor in some cases.

In the present invention, the amount of water in a cement concrete is preferably from 25/100 to 70/100, particularly preferably from 40/100 to 60/100% as a ratio of W/C (water/cement ratio). If such a ratio is less than 25/100, water may be insufficient and kneading will be difficult. If it exceeds 70/100, the concrete will be a so-called "shabby concrete", and sufficient strength may not be developed in some cases.

Further, the slump flow, etc. of the cement concrete to be used in the present invention are not particularly limited, but the slump value (JISA1101) is preferably at least 8 cm, and the flow value (JISA1150) is preferably at least 250 mm from the viewpoint of the excellent pressure-feeding property with a pump.

The cement to be used in the present invention is not particularly limited. As the cement, it is possible to use any one of various types of Portland cements such as ordinary, early-strength, ultra early-strength, moderate-heat and low-heat cements, and various blended cements in which blast-furnace slag, fly ash or fine powder of lime stone is blended with such Portland cements.

Further, it is preferred that the content of C3A(CaO*3Al₂O₃) which is one of minerals constituting the cement, is at least 5 parts in 100 parts of the cement. If it is less than 5 parts, a sufficient quick-setting property may not be obtained in some cases.

The amount of the cement to be used (the amount of a cement to be used at the time of making 1 m³ of a concrete, which is referred to also as the unit cement amount) is not particularly limited, and it is preferably at least 350 kg/m³, particularly preferably from 350 to 550 kg/m³ from the viewpoint of the excellent strength development.

In the present invention, as the case requires, additives such as gypsum, calcium hydroxide, aluminum hydroxide, calcium aluminate, calcium aluminosilicate, calcium sulfoaluminate, a pH adjustor, a disperser, an anti-freezing agent, a water-soluble accelerating agent, an AE agent, a water-reducing agent, an AE water-reducing agent, an aggregation retarder, a thickener, a fiber and a fine powder, may also be incorporated within a range not to substantially impair the purpose of the present invention.

The spraying method of the present invention, to be applied to slopes or tunnels can be any one of generally employed spraying methods of either the dry type or the wet type. Among them, the wet spraying method is preferred from the viewpoint of less dust generated.

As a method of mixing the present quick-setting admixture with a cement concrete to obtain the spraying material of the present invention (hereinafter referred to as the present spraying material), for example, it is preferably mixed immediately before spraying by using e.g. a branch pipe. Specifically, it is preferred to add the present liquid quick-setting admixture to a cement concrete fed under pressure and to discharge the present spraying material preferably within a period of 10 seconds, more preferably within 2 seconds.

It is possible to improve the quick-setting property by admixing the present quick-setting admixture with the cement concrete preferably under heating at a temperature of preferably at least 40°C, particularly preferably from 45 to 70°C.

The present spraying material may be sprayed on ground of slopes directly or portions where reinforcements are arranged. Here, the reinforcements are made of wire mesh or reinforcing bars, and it is preferred that a combination of such reinforcements are fixed on a wall to form a frame structure and the present spraying material is sprayed on such a frame to obtain a cement concrete frame containing reinforcements.

### EXAMPLES

### EXAMPLE 1

Using a blend having C/S (cement/sand ratio) of 1/2.5 and W/C (water/cement ratio) of 45/100, a mortar having a slump (SL) adjusted to about 18 cm by using a water-reducing agent, was prepared.

Relative to 100 parts of the cement in the mortar thus prepared, 10 parts of a liquid quick-setting admixture as shown in Table 1 was mixed, and the mixture was packed into a framework. A proctor penetration resistance value of each sample was measured at a test ambient temperature of 20°C. Table 1 also shows the results.

### <Materials used>

Raw material A: Aluminum raw material, aluminum hydroxide, first-class reagent
Raw material B: Aluminum raw material, aluminum sulfate octahydrate, first-class reagent
Raw material C: Sulfur raw material, sulfuric acid, first-class reagent
Raw material D: Alkali metal raw material, sodium carbonate, first-class reagent
Raw material E: Alkali metal raw material, potassium hydroxide, first-class reagent,
Raw material F: Fluorine raw material, cryolite, first-class reagent
Raw material G: Fluorine raw material, boron fluoride, first-class reagent
Raw material H: Fluorine raw material, magnesium silicofluoride, first-class reagent
Raw.material I: Alkanolamine, diethanolamine, industrial product
Raw material J: Alkanolamine, N,N-dimethylethanolamine, industrial product
   Complexing agent a: Malonic acid, first-class reagent Liquid quick-setting admixture: Obtained by mixing the respective raw materials in amounts calculated to achieve an elemental composition as shown in Table 1, and by mixing and stirring 50 parts of the resultant mixture and 50 parts of water by a ball mill at 80°C for 1 hour, Cement: Commercial cement (C3S=57%, C2S=19%, C4AF=10%, C3A=7%, wherein C:CaO, S:SiO₂, A:Al₂O₃, F:Fe₂O₃), density: 3.15 g/cm³
Water-reducing agent: Polycarboxylic acid-type high-performance AE water-reducing agent, commercial product Sand: From Himegawa, Niigata Prefecture, density 2.62 g/cm³
Water: Tap water

### <Measuring method>

### Proctor penetration resistance value: Measured in accordance with JSCE D-102-1999, material age: 10 minutes

### EXAMPLE 2

The same operation as in Example 1 was carried out except that, in the liquid quick-setting admixtures in Experiment Nos. 1-3, 1-10 and 1-17 in Table 1, the type and the amount of the complexing agent were changed as shown in Table 2 to confirm the storage stability of the quick-setting admixtures. The results are shown in Table 2.

### <Material used>

Complexing agent b: Oxalic acid, first-class reagent
Complexing agent c: Succinic acid, first-class reagent
Complexing agent d: Phosphoric acid, first-class reagent

### <Evaluation method>

Accelerated storage stability: 300 cc of a liquid quick-setting admixture was put in a sealed sample bottle, and, under an ambient at 40°C, the presence or absence of a deposit was observed for 3 days, 7 days, 1 month, 3 months from the beginning of the test. The deposit was separated by 5 kinds of filter papers A and evaluated on the basis that a case where the deposit was less than 2%, was represented by O, a case where the deposit was at least 2% and less than 4% was represented by Δ, and a case where the deposit was at least 4% was represented by X.

### EXPERIMENTAL EXAMPLE 3

In a unit cement amount of 400 kg/m³ and in a ratio of W/C=50/100 and s/a=65, a concrete having a slump adjusted to 18 cm by using a water-reducing agent was prepared. Then, such a concrete was fed at a rate of 10 m³/h by a concrete piston pump, and at 50 cm inside from the exhaust port, 4 m³/h of spraying air and 10 parts, based on the cement, of the liquid quick-setting admixture in Experiment No. 2-16 were mixed to such concrete, followed by spraying. Here, s/a is a sand-coarse aggregate ratio, and is a value in which a fine aggregate in the concrete is represented by percentage to the absolute volume of whole aggregates.

A hardened body obtained by spraying was measured in material age to determine its strength. The results are shown in Table 3.

### <Materials used>

Cement: Commercial cement (C3S=57%, C2S=19%, C4AF=10%, C3A=7%), density: 3.15 g/cm³
Water-reducing agent: Polycarboxylic acid-type high-performance AE water-reducing agent, commercial product Sand: From Himegawa, Niigata Prefecture, density 2.62 g/cm³
Ballast: From Himegawa, Niigata Prefecture, density 2.64 g/cm³

### <Measuring method>

Material age 3 hours, 24 hours: Measured in accordance with JSCE G-561.
Material age 28 days: Φ5.5×11 cm of a specimen is cut out from a curing material block, and its compression strength is measured.

Furthermore, the entire disclosure contents of the Japanese Patent Application 2003-351094 (filed with the Japanese Patent Office on October 20, 2003) is incorporated by reference herein as the disclosure of the present invention.

**TABLE 1**

| Experiment No. | SO₃ | Al₂O₃ | R₂O | F | Alkanolamine | Complexing agent a | Raw materials used | Penetration resistance (N/mm²) | Notes |
|---|---|---|---|---|---|---|---|---|---|
| 1-1 | 100 | 0 | 15 | - | - | 15 | C,D | 1.2 | C.E. |
| 1-2 | 100 | 25 | 15 | - | - | 15 | B,C,D | 3.5 | P.I. |
| 1-3 | 100 | 60 | 15 | - | - | 15 | A,B,D | 5.3 | P.I. |
| 1-4 | 100 | 110 | 15 | - | - | 15 | A,B,D | 6.2 | P.I. |
| 1-5 | 100 | 60 | 0 | - | - | 15 | A,B | 2.8 | C.E. |
| 1-6 | 100 | 60 | 2.5 | - | - | 15 | A,B,D | 4.1 | P.I. |
| 1-7 | 100 | 60 | 50 | - | - | 15 | A,B,D | 7.1 | P.I. |
| 1-8 | 100 | 60 | 15 | 2.5 | - | 15 | A,B,D,G | 11.5 | P.I. |
| 1-9 | 100 | 60 | 15 | 15 | - | 15 | A,B,D,G | 13.5 | P.I. |
| 1-10 | 100 | 60 | 15 | 15 | - | 15 | A,B,D,F | 16.2 | P.I. |
| 1-11 | 100 | 60 | 15 | 15 | - | 15 | A,B,D,H | 14.6 | P.I. |
| 1-12 | 100 | 60 | 15 | 50 | - | 15 | A,B,D,H | 16.8 | P.I. |
| 1-13 | 100 | 60 | 15 | 15 | 2.5 | 15 | A,B,D,F,I | 18.7 | P.I. |
| 1-14 | 100 | 60 | 15 | - | 15 | 15 | A,B,D,I | 8.3 | P.I. |
| 1-15 | 100 | 60 | 15 | 15 | 15 | 15 | A,B,D,F,I | 23.3 | P.I. |
| 1-16 | 100 | 60 | 15 | 15 | 15 | 15 | A,B,D,F,J | 21.1 | P.I. |
| 1-17 | 100 | 60 | 15 | 15 | 15 | 15 | A,B,D,F,I,J | 25.6 | P.I. |
| 1-18 | 100 | 60 | 15 | 15 | 50 | 15 | A,B,D,F,I | 27.2 | P.I. |
| 1-19 | 0 | 60 | 15 | - | - | 15 | A,D | 2.0 | C.E. |

| | | | | | | | | | |
|---|---|---|---|---|---|---|---|---|---|
| SO₃, Al₂O₃, R₂O, F, alkanolamine and the complexing agent a are represented by "parts". In Experiment No. 1-17, 15 parts of an equivalent mixture of I and J, was used. The liquid quick-setting admixture in each of Experiment Nos. except for Experiment No. 1-19 had a pH of at most 6. C.E.: Comparative Example, P.I.: Present invention | | | | | | | | | |

**TABLE 2**

| Experiment No. | Composition of SO₃, Al₂O₃, R₂O and F | Complexing agent | | Penetration resistance (N/mm²) | Accelerated storage stabilities | | | | Notes |
|---|---|---|---|---|---|---|---|---|---|
| | | | | | 3 days | 7 days | 1 month | 3 months | |
| 2-1 | 1-3 | - | 0.0 | 3.2 | × | × | × | × | C.E. |
| 2-2 | 1-3 | a | 2.5 | 4.4 | ○ | ○ | ○ | Δ | P.I. |
| 1-3 | 1-3 | a | 15 | 5.3 | ○ | ○ | ○ | ○ | P.I. |
| 2-3 | 1-3 | a | 75 | 4.1 | ○ | ○ | ○ | ○ | P.I. |
| 2-4 | 1-3 | a | 90 | 3.0 | ○ | ○ | ○ | ○ | P.I. |
| 2-5 | 1-10 | a | 2.5 | 14.3 | ○ | ○ | ○ | ○ | P.I. |
| 1-10 | 1-10 | a | 15 | 16.2 | ○ | ○ | ○ | ○ | P.I. |
| 2-6 | 1-10 | a | 75 | 15.4 | ○ | ○ | ○ | ○ | P.I. |
| 2-7 | 1-17 | a | 2.5 | 22.3 | ○ | ○ | ○ | ○ | P.I. |
| 1-17 | 1-17 | a | 15 | 25.6 | ○ | ○ | ○ | ○ | P.I. |
| 2-8 | 1-17 | a | 75 | 23.1 | ○ | ○ | ○ | ○ | P.I. |
| 2-9 | 1-3 | b | 2.5 | 4.1 | ○ | ○ | ○ | ○ | P.I. |
| 2-10 | 1-3 | b | 15 | 5.0 | ○ | ○ | ○ | ○ | P.I. |
| 2-11 | 1-3 | b | 75 | 4.3 | ○ | ○ | ○ | ○ | P.I. |
| 2-12 | 1-10 | b | 2.5 | 13.3 | ○ | ○ | ○ | ○ | P.I. |
| 2-13 | 1-10 | b | 15 | 15.5 | ○ | ○ | ○ | ○ | P.I. |
| 2-14 | 1-10 | b | 75 | 12.8 | ○ | ○ | ○ | ○ | P.I. |
| 2-15 | 1-17 | b | 2.5 | 20.9 | ○ | ○ | ○ | ○ | P.I. |
| 2-16 | 1-17 | b | 15 | 23.3 | ○ | ○ | ○ | ○ | P.I. |
| 2-17 | 1-17 | b | 75 | 21.1 | ○ | ○ | ○ | ○ | P.I. |
| 2-18 | 1-3 | c | 2.5 | 3.2 | ○ | ○ | ○ | ○ | P.I. |
| 2-19 | 1-3 | c | 15 | 4.4 | ○ | ○ | ○ | ○ | P.I. |
| 2-20 | 1-3 | c | 75 | 3.8 | ○ | ○ | ○ | ○ | P.I. |
| 2-21 | 1-10 | c | 2.5 | 11.3 | ○ | ○ | ○ | ○ | P.I. |
| 2-22 | 1-10 | c | 15 | 14.0 | ○ | ○ | ○ | ○ | P.I. |
| 2-23 | 1-10 | c | 75 | 12.5 | ○ | ○ | ○ | ○ | P.I. |
| 2-24 | 1-17 | c | 2.5 | 19.6 | ○ | ○ | ○ | ○ | P.I. |
| 2-25 | 1-17 | c | 15 | 22.1 | ○ | ○ | ○ | ○ | P.I. |
| 2-26 | 1-17 | c | 75 | 20.4 | ○ | ○ | ○ | ○ | P.I. |

| | | | | | | | | | |
|---|---|---|---|---|---|---|---|---|---|
| The amount of the complexing agent was based on "parts" relative to 100 parts of SO₃; in the accelerated storage stabilities, less than 2% of deposit was represented by ○, at least 2% and less than 4% of the deposit was represented by Δ, and at least 4% of the deposit was represented by X. | | | | | | | | | |
| Each of the liquid quick-setting admixtures had a pH of at most 6. | | | | | | | | | |
| C.E.: Comparative Example, P.I.: Present invention | | | | | | | | | |

**TABLE 3**

| Experiment No. | Strength | | |
|---|---|---|---|
| | 3 hours | 24 hours | 28 days |
| 3-1 | 2.2 | 15.2 | 36.7 |
| (unit: N/mm²) | | | |

## Claims

1. A liquid quick-setting admixture **characterized by** comprising sulfur, aluminum and alkali metal element components, and a complexing agent.

2. The liquid quick-setting admixture according to Claim 1, wherein the liquid quick-setting admixture contains, per 100 parts of the sulfur element component as SO₃, from 25 to 110 parts of the aluminum element component as Al₂O₃, from 2.5 to 50 parts of the alkali metal element component as R₂O (in which R is an alkali metal atom) and from 2.5 to 75 parts of the complexing agent.

3. The liquid quick-setting admixture according to Claim 1 or 2, which further contains fluorine.

4. The liquid quick-setting admixture according to any one of Claims 1 to 3, wherein the liquid quick-setting admixture contains from 2.5 to 50 parts of fluorine per 100 parts of the sulfur element component as SO₃.

5. The liquid quick-setting admixture according to any one of Claims 1 to 4, which further contains an alkanolamine.

6. The liquid quick-setting admixture according to any one of Claims 1 to 5, wherein the liquid quick-setting admixture contains from 2.5 to 50 parts of an alkanolamine per 100 parts of the sulfur element component as SO₃.

7. The liquid quick-setting admixture according to any one of Claims 1 to 6, wherein the alkali metal element component is sodium or potassium.

8. The liquid quick-setting admixture according to any one of Claims 1 to 7, wherein the complexing agent is an organic acid having from 1 to 3 carboxyl groups.

9. The liquid quick-setting admixture according to any one of Claims 1 to 8, wherein the complexing agent is incorporated in an amount of from 2.5 to 75 parts per 100 parts of the sulfur element component as SO₃.

10. The liquid quick-setting admixture according to any one of Claims 1 to 9, wherein the liquid quick-setting admixture has a pH of at most 6.

11. A spraying material comprising the liquid quick-setting admixture as defined in any one of Claims 1 to 10, cement, water and an aggregate.

12. The spraying material according to Claim 11, wherein the liquid quick-setting admixture is contained in an amount of from 5 to 15 parts per 100 parts of cement.

13. The spraying material according to Claim 11 or 12, wherein the unit cement amount is at least 350 kg/m³.

14. The spraying material according to any one of Claims 11 to 13, wherein the cement is one having a C3A content of at least 5 parts in 100 parts of the cement.

15. A spraying method which comprises spraying the spraying material as defined in any one of Claims 11 to 14.
